# EUROPEAN PATENT SPECIFICATION

(11) **EP 1 914 628 B1**
(45) Date of publication and mention of the grant of the patent: **04.04.2018**
(21) Application number: 06021616.5
(22) Date of filing: 16.10.2006
(51) Int. Cl.: G06F 9/44, G06F 11/14

(54) **Method for changing booting sources of computer system and related backup/restore method thereof**
Verfahren zur Änderung der Boot-Ressourcen eines Computersystems und damit verbundenes Sicherungs-/Wiederherstellungsverfahren
Procédé de changement des sources de démarrage d'un système informatique et procédé de sauvegarde/restauration associé

(43) Date of publication of application: 23.04.2008
(73) Proprietor: ASUSTeK Computer Inc., Peitou Taipei (TW)
(72) Inventor: Hsu, Wen-Shiu, Peitou Taipei City (TW); Chang, Chiung-Wen, Peitou Taipei City (TW)
(74) Representative: Hoefer & Partner Patentanwälte mbB

(56) References cited:
- CURTIS PRESTON W: "Unix Backup & Recovery passage" UNIX BACKUP AND RECOVERY, O'REILLY,US, 1999, pages 270-281, XP002439753 ISBN: 1-56592-642-0
- SCHMIDT J ET AL: "HOLS VON STOECKCHEN NOTFALL-SYSTEM VOM USB-STICK BOOTEN" CT MAGAZIN FUER COMPUTER TECHNIK, HEISE ZEITSCHRIFTEN VERLAG, HANNOVER, DE, no. 13, 16 June 2003 (2003-06-16), pages 208-210, XP001163770 ISSN: 0724-8679
- "Fedora Core Installation to an External USB Disk Drive", , 1 April 2005 (2005-04-01), pages 1-12, XP055245048, Retrieved from the Internet: URL:http://www.vigla.eclipse.co.uk/usb_ins tall.pdf [retrieved on 2016-01-27]

## Description

The present invention relates to a method for automatically changing a booting source and a related data backup/restore method according to the pre-characterizing clauses of claims 1 and 5. Such methods are disclosed in "Fedora Core Installation to an External USB Disk Drive", 1 April 2005 (2005-04-01), pages 1-12, XP055245048, Retrieved form the Internet: URL: http://www.viglia.eclipse.co.uk/usb_install.pdf [retrieved on 2016-01-27].

In computer systems, the concepts of data backup/restore are widely known. A user can backup important data or files in an external target device. If the files inside the computer system are damaged, the user can utilize the backup files inside the target device to restore the damaged files. For example, the user can directly copy a file into the target device, or execute a backup program to burn data/files into an image file and store the image file in the target device.

When utilizing a backup program, however, the user has to first set the BIOS of the computer system to change the booting source, then determine a source disk (which stores the files to be backed up) and a target disk (which the files are copied to), and finally reboot the computer system to execute an operating system stored in the target disk such that the backup/restore operation can be performed correctly.

As some users are not familiar with the settings of BIOS, it is difficult for them to set the BIOS themselves, resulting in some errors. Today's backup/restore programs do not enable the users to complete backup/restore operations easily.

"Curtis Preston W.: Unix Backup & Recovery passage" describes a recovery procedure of a Linux syxtem. The following six major steps are described:
1. backup the important meta data
2. backup the operating system with a native utility
3. boot from alternative media
4. partition and format the new root disk
5. restore the operating system information
6. restore the boot block on the new root disk

In the step "boot the system from alternative media", it is described that rescue floppies that contain an minimal version of the Linux and all of the necessary recovery utilities should be used to generate a "mini root" or other limited root shell where you can run the necessary utilities. It is described that, to use a rescue floppy, it can be simply inserted into a floppy drive and "boot floppy" can be inserted or the booting of the system with the floppy depends on which type of firmware is used. In the section "a sample bare-metal recovery", it is described that to do the re-boot, actually the lilo boot block and the disks partition information have to be blown away so that the currently running operating system asks for a system disk in the driver after the actual reboot command.

Further, "Schmidt J. et al.: Hols vom Stöckchen Notfall-System vom USB-Stick booten" describes how to boot a rescue system of an USB stick. It is in particular described how the USB stick has to be formatted and prepared to allow a booting therefrom. Furthermore, it is described that to allow the booting from the USB stick, the BIOS has to be configured correctly, which implies a correct boot sequence as well as the activation of the option "USB legacy support". Therefore, the booting of the USB stick is not performed when one operating system is running, but actually when the computer will be started.

This in mind, the present invention aims at providing a method for automatically changing a booting source in a computer system and a related backup/restore method, to solve the above-mentioned problem.

This is achieved by a method for changing a booting source according to claim 1 and a related backup/restore method according to claim 5. The respective dependent claims pertain to corresponding further developments and improvements.

As will be seen more clearly from the detailed description following below, the claimed method is utilized in a computer system having a first storage device storing the first operating system and a second storage device storing a second operating system. The method includes: receiving a signal from the second storage device; detecting whether the second storage device is a target device; when it is determined that the second storage device is a target device, setting the second storage device as a booting device; rebooting; and executing the second operating system from the second storage device. In addition, a method for backuping/restoring data when a first operating system is being executed is also disclosed. The method is utilized in a computer system having a first storage device storing the first operating system and a second storage device storing a second operating system. The method includes: receiving a signal from the second storage device; detecting whether the second storage device is a target device; when it is determined that the second storage device is a target device, setting the second storage device as a booting device; rebooting; executing the second operating system from the second storage device; and executing a data backup/restore program.

In the following, the invention is further illustrated by way of example, taking reference to the accompanying drawings.

Thereof
Fig.1 is a hardware block diagram of a first embodiment according to the present invention,
Fig.2 is a hardware block diagram of a second embodiment according to the present invention,
Fig.3 is a software block diagram according to the present invention.
Fig.4 is a flow chart of the first control program according to the present invention,
Fig.5 is a software block diagram of another embodiment according to the present invention,
Fig.6 is a flow chart of the embodiment in Fig.5,
Fig.7 is a flow chart detailing additional steps added to the flow chart in Fig.6, and
Fig.8 is a flow chart corresponding to certain steps shown in Fig.6.

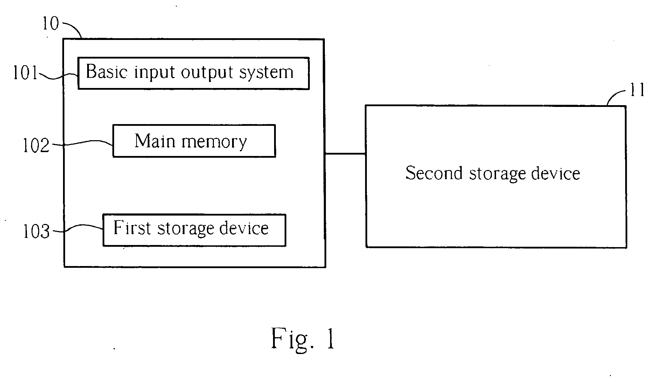

Please refer to Fig.1, which is a hardware block diagram of a first embodiment according to the present invention. In some embodiments, the computer system 10 can be a desktop computer or a laptop. The computer system 10 can comprise a basic input output system (BIOS) 101 for initializing the computer system 10. The main memory 102 is used to store programs or can be used as a buffer for storing data when the programs are being executed. In an embodiment, the main memory 102 can be a random access memory (RAM). The computer system 10 further comprises a first storage device 103 for storing data and programs. Please note that the computer system 10 can be connected to a second storage device 11. In this embodiment, the second storage device 11 is an external storage device, which is plugged into the computer system 10. For example, the second storage device 11 can be a USB storage device such as flash memory sticks, an MP3 player, or memory cards. Please note that this modification is only regarded as an example, and not a limitation of the present invention. For example, the second storage device 11 can be a storage device utilizing an IEEE 1394 interface.

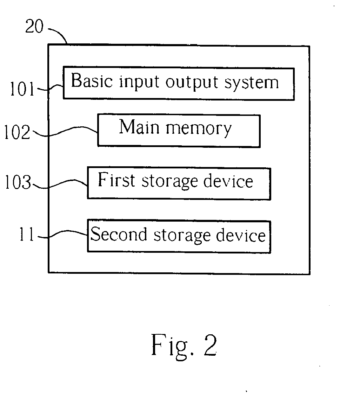

Please refer to Fig.2, which is a hardware block diagram of a second embodiment according to the present invention. The difference between the first and the second embodiments is that the second storage device 11 of the second embodiment is an inner device of the computer system 20. The hardware block diagram shown in Fig.2 illustrates that the present invention hardware structure is not limited as the hardware structure shown in Fig.1. Furthermore, as long as the BIOS 101 supports the connection of a specific interface, the second storage device 11 can be implemented through all kinds of interfaces. Therefore, the present invention hardware structure is not limited to the hardware structures shown in Fig.1 and Fig.2. Furthermore, in order to illustrate the technique of the present invention, the hardware structure shown in Fig.1 is utilized in the following disclosure.

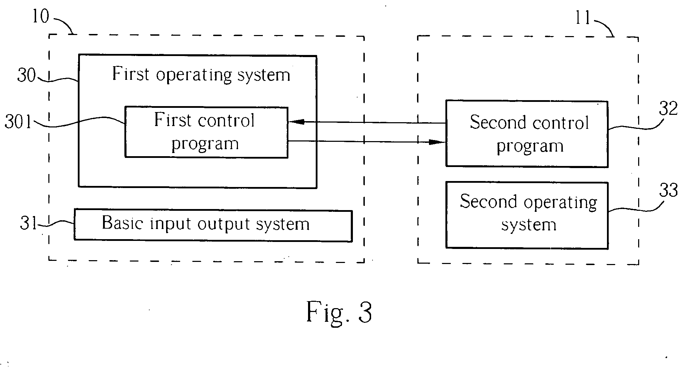

Please refer to Fig.3, which is a software block diagram according to the present invention. As shown in Fig.3, the computer system 10 comprises a first operating system 30 for providing a user interface such that the user can utilize the computer system 10 easily. In an embodiment, the first operating system 30 can be a well-known operating system "Windows" produced by the Microsoft Company.

In addition, the first operating system 30 comprises a first control program 301 for performing the steps of the present invention. These steps will be illustrated in the following disclosure. The computer system 10 further comprises a BIOS 31 for checking the memory space, checking ports existence, and controlling the order of the booting sources.

The second storage device 11 comprises a second control program 32. The second control program 32 is utilized to inform the computer 10 which port the second storage device 11 utilizes. Moreover, the second storage device 11 further comprises a second operating system 33 for providing a user interface. For example, the second operating system 33 can be the operating system DOS produced by the Microsoft Company.

Please note that the DOS and the Windows operating systems are only regarded as embodiments, and not limitations of the present invention. For example, the first and the second operating systems can be the same operating system. In the following disclosure, the steps of switching two operating systems are illustrated.

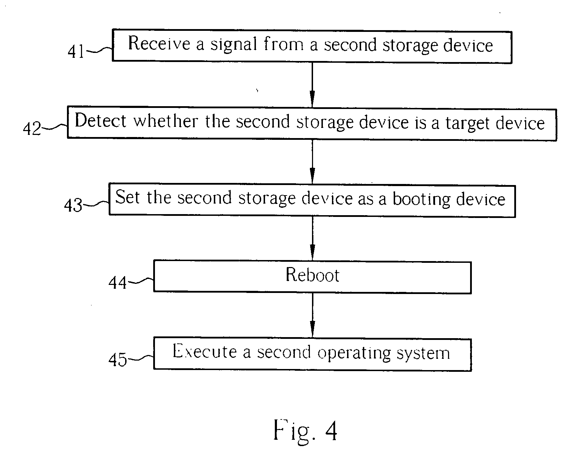

Please refer to Fig.4, which is a flow chart of the first control program 301 according to the present invention. Please refer to Fig.4 in conjunction with Fig.3. When the second storage device 11 is connected to the computer system 10, the first control program 301 receives a signal from the second storage device 11 (step 41). In this embodiment, after the first control program 301 receives a signal from the second storage device 11, the first control program 301 obtains the information of the port, which is the second storage device 11 connected to. For example, the port information can be a port number or a bus controller. The first control program 301 then detects whether the second storage device 11 is a target device (step 42). In an embodiment, the target device can be a device for backing up/restoring data of the computer system 10. Please note that the target device is not limited to be a backuping/restoring device. Instead, the target device just needs to be a device storing an operating system such that the computer system 10 can utilize the device as a booting device. Furthermore, if the second storage device 11 is a target device, the control program 301 sets the second storage device 11 as the booting device of the computer system 10. In an embodiment, the first control program 301 can utilize a driver or an advanced configuration and power interface (ACPI) to change the booting order stored inside the BIOS 31, and then the computer system 10 is rebooted (step 44). Therefore, the computer system 10 executes the second operating system 33 from the second storage device 11 (step 45).

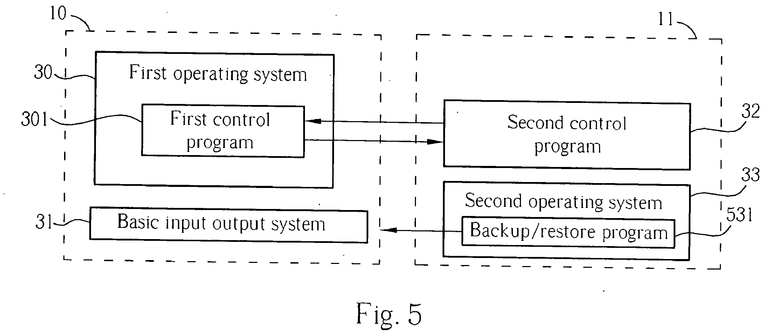

Please refer to Fig.5, which is a software block diagram of another embodiment according to the present invention. In contrast to Fig.3, the second operating system 33 further comprises another backup/restore program 531. The backup/restore program 531 is a program that can be executed under the second operating system 33, to backup/restore the computer system 10. In an embodiment, the backup/restore program 531 can be a well-known Ghost backup/restore program, which is produced by the Norton Company.

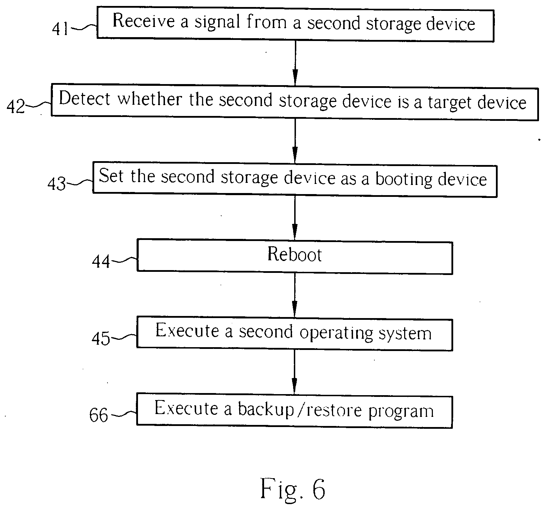

Please refer to Fig.6, which is a flow chart of another embodiment based on Fig.5. Steps 41 to 44 are all similar to the embodiment shown in Fig.4, and thus omitted here. In this embodiment, another step 66 "executing a backup/restore program" is disclosed. Here, the backup/restore program can be a package software, i.e. in actual applications, the backup/restore operations can be divided into separate backup operations and restore operations. Therefore, step 66 can be divided into two separate steps: "executing backup operation" and "executing restore operation".

In the backup operation, the present invention can assume that the target device is a disk for storing the backup data. Therefore, the steps of the present invention comprise: receiving a triggering signal from the storage device; detecting whether the storage device is a target device; if the storage device is a target device, setting the storage device as a booting device; rebooting; executing the second operating system from the target device; and executing the backup program. After performing these steps, the data of the computer system can be backuped into the target device. Similarly, the last step can be changed to be "executing the restore program", where the target device can be a restore disk for performing the step of restoring the computer system. In this embodiment, the first operating system is the "Windows" system, the second operating system is the "DOS", and the data backup/restore program is the "Ghost". According to the above-mentioned steps, the users are not required to know how to set the BIOS to change the booting order stored inside the BIOS. Furthermore, the users are not required to know how to use DOS or "Ghost". In other words, even if the users are not familiar with the operating systems or the backup/restore programs, they can easily complete the backup/restore operation by just connecting the target device to the computer system.

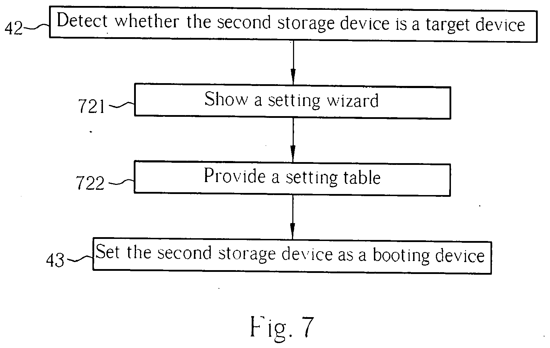

Please refer to Fig.7. In order to make the target device capable of being utilized to backup/restore data, two steps can be added between steps 42 and 43. First, a setting wizard can be utilized (step 721) in the first operating system 30, and then a setting table is provided (step 722). Please note that the setting table comprises options for selecting whether the backup operation or the restore operation will be executed.

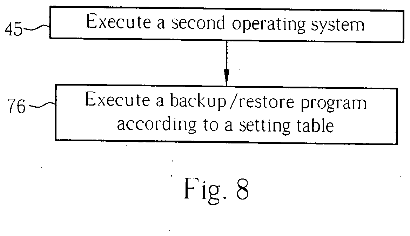

Please refer to Fig.8, which details the second operating system being executed (step 45). A backup/restore program is executed according to the option determined from the setting table. For example, the user can select the restore operation from the setting table, and the restore operation will therefore be executed later.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for changing a booting source when a first operating system (30) is being executed, the method utilized in a computer system (10) having a first storage device (103) storing the first operating system (30) and a second storage device (11) storing a second operating system (33), the method **characterized by**:
receiving a signal from the second storage device (11);
detecting whether the second storage device (11) is a target device;
when it is determined that the second storage device is a target device, setting the second storage device (11) as a booting device;
rebooting; and
executing the second operating system (33) from the second storage device (11).

2. The method of claim 1, **characterized in that** the step of detecting whether the second storage device (11) is a target device further comprises:
obtaining port information of the second storage device (11).

3. The method of claim 1, **characterized in that** the step of setting the second storage device (11) as a booting device is performed through a driver or an advanced configuration and power interface (ACPI).

4. The method of claim 1, **characterized in that** the second storage device (11) is a portable storage device.

5. A method for backuping/restoring data performing the method for changing a booting source according to anyone of claims 1 to 4; and
executing a data backup/restore program (531).

## Patentansprüche

1. Verfahren zum Ändern einer Systemstart-Quelle, wenn ein erstes Betriebssystem (30) ausgeführt wird, wobei das Verfahren in einem Computer-System (10) verwendet wird, das eine erste Speichervorrichtung (103), die das erste Betriebssystem (30) speichert, und eine zweite Speichervorrichtung (11), die ein zweites Betriebssystem (33) speichert, aufweist, wobei das Verfahren **gekennzeichnet ist durch**:
Empfangen eines Signals von der zweiten Speichervorrichtung (11);
Feststellen, ob die zweite Speichervorrichtung (11) eine Zielvorrichtung ist;
wenn festgestellt wird, dass die zweite Speichervorrichtung eine Zielvorrichtung ist, Festlegen der zweiten Speichervorrichtung (11) als eine Systemstart-Vorrichtung;
erneutes Starten des Systems; und
Ausführen des zweiten Betriebssystems (33) von der zweiten Speichervorrichtung (11).

2. Verfahren gemäß Anspruch 1, **dadurch gekennzeichnet, dass** der Schritt des Feststellens, ob die zweite Speichervorrichtung (11) eine Zielvorrichtung ist, weiter aufweist:
Erhalten einer Anschlussinformation der zweiten Speichervorrichtung (11).

3. Verfahren gemäß Anspruch 1, **dadurch gekennzeichnet, dass** der Schritt des Festlegens der zweiten Speichervorrichtung (11) als eine Systemstart-Vorrichtung über einen Treiber oder eine erweiterte Konfigurations- und Leistungsschnittstelle (ACPI) ausgeführt wird.

4. Verfahren gemäß Anspruch 1, **dadurch gekennzeichnet, dass** die zweite Speichervorrichtung (11) eine tragbare Speichervorrichtung ist.

5. Verfahren zum Sichern/Wiederherstellen von Daten durch Ausführen des Verfahrens zum Ändern einer Systemstart-Quelle gemäß einem der Ansprüche 1 bis 4; und
Ausführen eines Datensicherungs-/wiederherstellungs-Programms (531).

## Revendications

1. Procédé pour changer une source de démarrage lorsqu'un premier système d'exploitation (30) est en cours d'exécution, le procédé utilisé dans un système informatique (10) ayant un premier dispositif de stockage (103) stockant le premier système d'exploitation (30) et un deuxième dispositif de stockage (11) stockant un deuxième système d'exploitation (33), le procédé étant **caractérisé par** le fait :
de recevoir un signal du deuxième dispositif de stockage (11);
de détecter si le deuxième dispositif de stockage (11) est un dispositif cible ;
lorsqu'il est déterminé que le deuxième dispositif de stockage est un dispositif cible, de définir le deuxième dispositif de stockage (11) en tant que dispositif de démarrage ;
de redémarrer ; et
d'exécuter le deuxième système d'exploitation (33) à partir du deuxième dispositif de stockage (11).

2. Procédé de la revendication 1, **caractérisé en ce que** l'étape qui consiste à détecter si le deuxième dispositif de stockage (11) est un dispositif cible comprend en outre le fait :
d'obtenir des informations de port du deuxième dispositif de stockage (11).

3. Procédé de la revendication 1, **caractérisé en ce que** l'étape qui consiste à définir le deuxième dispositif de stockage (11) en tant que dispositif de démarrage est réalisée à travers un pilote ou une interface avancée de configuration et de gestion de l'énergie (ACPI).

4. Procédé de la revendication 1, **caractérisé en ce que** le deuxième dispositif de stockage (11) est un dispositif de stockage portable.

5. Procédé pour sauvegarder/restaurer des données réalisant le procédé pour changer une source de démarrage selon l'une quelconque des revendications 1 à 4 ; et
exécuter un programme de sauvegarde/restauration de données (531).
